# EUROPÄISCHE PATENTANMELDUNG

(11) **EP 1 795 904 A1**
(43) Veröffentlichungstag der Anmeldung: **13.06.2007**
(21) Anmeldenummer: 06023957.1
(22) Anmeldetag: 17.11.2006
(51) Int. Cl.: G01P 21/02, G01D 18/00, G01B 7/14, G01B 7/02, G01B 7/00

(54) **Verfahren und Vorrichtung zur Justierung des Sensorabstands in einer Positions- und/oder Geschwindigkeitsmesseinrichtung**

(30) Priorität: 07.12.2005 DE 102005058597
(71) Anmelder: SICK STEGMANN GmbH, 78166 Donaueschingen (DE)
(72) Erfinder: Siraky, Josef, 78166 Donaueschingen (DE); Keller, Martin, 78628 Rottweil (DE); Stobbe, Willibald, 78166 Donaueschingen (DE)
(74) Vertreter: Patentanwälte Westphal, Mussgnug & Partner

(57) **Zusammenfassung**

Zur Justierung des Abstands zwischen einer Maßverkörperung und einer Abtasteinheit (7) einer Positions- und/oder Geschwindigkeitsmesseinrichtung ist die Abstandseinheit (7) zusammen mit einer Flachspule (3) eines separaten Abstandssensors auf einem Träger (8) angeordnet, der in der Messeinrichtung im Abstand von der Maßverkörperung (9) verstellbar ist. Ein der Maßverkörperung entsprechender Testkörper (1) wird mittels eines Abstandshalters (2) in dem optimalen Abstand (dₒₚₜ) von Maßverkörperung und Abtasteinheit (7) angeordnet. Bei dieser Anordnung wird zur Kalibrierung des Abstandssensors die durch die Induktivität der Flachspule (3) bestimmte Frequenz eines Oszillators (5) ermittelt und gespeichert. Bei der Justierung der Abtasteinheit (7) in der Messeinrichtung wird der Träger (8) gegenüber der Maßverkörperung im Abstand verstellt, bis die Frequenz des Oszillators (5) mit der gespeicherten Frequenz übereinstimmt.

## Beschreibung

Die Erfindung betrifft ein Verfahren zur Justierung einer Positions- und/oder Geschwindigkeitsmesseinrichtung gemäß dem Oberbegriff des Patentanspruchs 1 und eine Vorrichtung zur Justierung einer Positions- und/oder Geschwindigkeitsmesseinrichtung gemäß dem Oberbegriff des Patentanspruchs 5.

Einrichtungen zur Messung einer linearen oder rotatorischen Position und/oder Geschwindigkeit weisen häufig eine Maßverkörperung auf, die sich entsprechend der Bewegung des zu messenden Objekts bewegt. Die Maßverkörperung wird durch eine Abtasteinheit abgetastet, um Positions- bzw. Geschwindigkeitssignale zu erhalten. Die Maßverkörperung kann optisch, magnetisch oder in sonstiger Weise abgetastet werden.

Für eine exakte Messung ist es notwendig, dass die Maßverkörperung und die zugeordnete Abtastung gegenseitig genau justiert sind, wobei insbesondere eine genaue Einstellung des Abstandes von Maßverkörperung und Abtasteinheit wichtig ist. Diese Abstandseinstellung ist schwierig, da die Einstellung bei montierter Messeinrichtung durchgeführt werden muss. Die Maßverkörperung und die Abtasteinheit müssen hierzu frei zugänglich sein, um mit geeigneten Messmitteln den erforderlichen Abstand einzustellen. Unter Umständen muss am Träger der Maßverkörperung Material abgetragen werden, um die exakte Abstandseinstellung zu erreichen, was zusätzlich das Risiko einer Beschädigung mit sich bringt.

Der Erfindung liegt die Aufgabe zugrunde, eine genaue Abstandsjustierung von Maßverkörperung und Abtasteinheit in einfacher Weise zu ermöglichen.

Diese Aufgabe wird erfindungsgemäß gelöst durch ein Verfahren mit den Merkmalen des Patentanspruchs 1 sowie durch eine Vorrichtung mit den Merkmalen des Patentanspruchs 5.

Vorteilhafte Ausführungen der Erfindung sind in den rückbezogenen Unteransprüchen angegeben.

Erfindungsgemäß wird die Abtasteinheit zusammen mit einer Flachspule auf einem gemeinsamen Träger angeordnet. Ein der Maßverkörperung entsprechender Testkörper wird mittels eines Abstandshalters in dem vorgeschriebenen optimalen Abstand von der Abtasteinrichtung angeordnet. Die Flachspule ist mit einem Oszillator in der Weise verschaltet, dass die Flachspule die frequenzbestimmende Induktivität des Oszillators bildet. Der Testkörper ist in Bezug auf seinen Werkstoff und auf seine Abmessungen der Maßverkörperung nachgebildet, so dass er das Feld der Flachspule in gleicher Weise beeinflusst wie die in derselben Position angeordnete Mäßverkörperung. Wenn der Testkörper und die Abtasteinheit mittels des Abstandshalters sich in genau dem Abstand befinden, der für die Maßverkörperung und die Abstandseinheit vorgesehen ist, wird die Frequenz des Oszillators ermittelt, die wiederum von dem abstandsabhängigen Einfluss des Testkörpers auf die Induktivität der Flachspule bestimmt ist. Diese dem optimalen Abstand entsprechende Frequenz des Oszillators wird gespeichert. Bei der Montage der Messeinrichtung ist der Träger mit der Abtasteinheit und der Flachspule in der Messeinrichtung bezüglich des Abstands von der Maßverkörperung verstellbar angebracht. Es kann nun der Träger und damit der Abstand der Abtasteinheit von der Maßverkörperung verstellt werden, wobei die Frequenz des Oszillators beobachtet wird. Wenn diese Frequenz mit der gespeicherten Frequenz übereinstimmt, hat die Flachspule und damit die auf demselben Träger angeordnete Abtasteinheit den vorgeschriebenen Abstand von der Maßverkörperulng.

Da der optimale Abstand von Abtasteinheit und Maßverkörperung erfindungsgemäß für jede Messeinrichtung individuell ermittelt und bei der Montage eingestellt wird, werden Herstellungstoleranzen der Abtasteinheit und Einbautoleranzen bei der Montage in einfacher Weise eliminiert.

In einer mechanisch vorteilhaften Ausführung weist der Träger eine Leiterplatine auf, auf welcher die Abtasteinheit und die Flachspule angeordnet sind. Die Leiterplatine dient dabei gleichzeitig zur Verschaltung dieser Bauelemente. In vorteilhafter Weise ist auch ein nicht flüchtiger Speicher, z. B. ein EEPROM auf dieser Leiterplatine angebracht, der zur Speicherung der ermittelten Frequenz dient.

Der Abstandshalter soll einerseits eine möglichst exakte Abstandseinstellung ermöglichen und andererseits das Feld der Flachspule möglichst wenig beeinflussen. Der Abstandshalter ist daher vorzugsweise aus Kunststoff hergestellt. Ist die Maßverkörperung als Scheibe ausgebildet, z. B. als kreisförmige Scheibe bei einem rotatorischen Messsystem oder als linearer Maßstab bei einem translatorisehen Messsystem, so ist der Testkörper mit einer dieser Scheibe entsprechenden Dicke ausgebildet, um das Feld der Flachspule in möglichst übereinstimmender Weise zu beeinflussen, wie die Maßverkörperung selbst. In einer solchen Ausführung ist der Abstandshalter zweckmäßigerweise mit dem Testkörper fest verbunden, was die Handhabung vereinfacht.

Für die Justierung der Messeinrichtung bei der Montage ist es vorteilhaft, wenn der Träger mit der Abtasteinheit und der Flachspule auf einem Schlitten angeordnet ist, der bei montierter Messeinrichtung z. B. mittels einer Stellschraube von der Außenseite der Messeinrichtung gegen die Maßverkörperung verschiebbar ist.

Im folgenden wird die Erfindung anhand eines in der Zeichnung dargestellten Ausführungsbeispiels näher erläutert. Es zeigen:

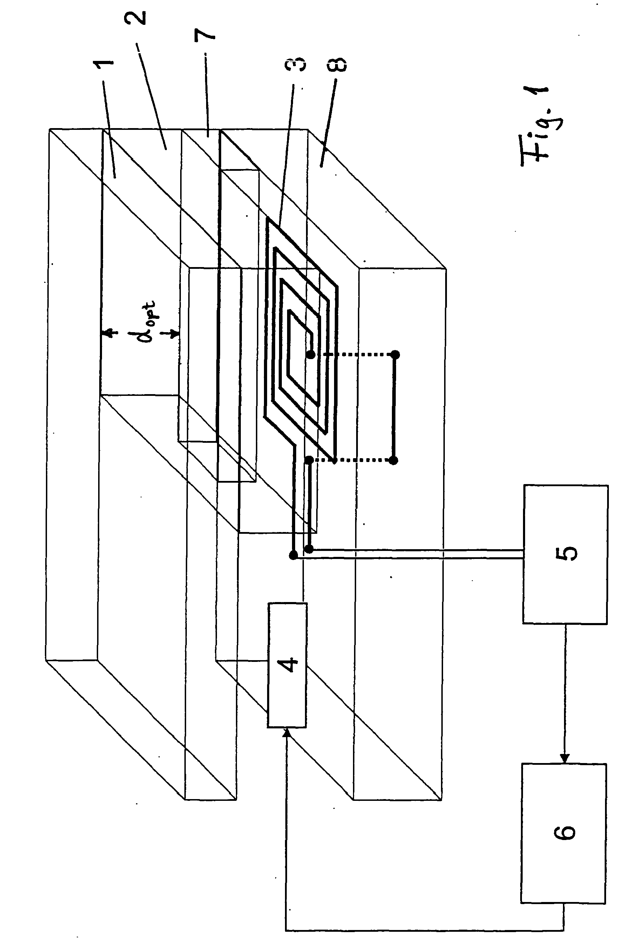

- Figur 1: in schematischer Darstellung die Ermittlung der Frequenz für die Justierung und
- Figur 2: in einer entsprechenden schematischen Darstellung die Abstandsjustierung.

Eine nicht dargestellte und dem bekannten Stand der Technik entsprechende Einrichtung zum Messen der linearen oder rotatorischen Position und/oder Geschwindigkeit eines Objektes weist eine Maßverkörperung 9 auf, die durch eine Abtasteinheit 7 abgetastet wird. Die Maßverkörperung 9 ist nur schematisch als Scheibe dargestellt und ebenso ist die Abtasteinheit 7 schematisch als Block dargestellt. Die Maßverkörperung 9 und die Abtasteinheit 7 sind ebenfalls in an sich bekannter Weise ausgebildet, so dass sie nicht im Detail beschrieben werden müssen. Die Maßverkörperung 9 kann für eine rotatorische Messung die Form einer Kreisscheibe haben oder für eine translatorische Messung die Form eines Maßstabes. Die Maßverkörperung 9 weist eine absolute und/oder inkrementale Codierung auf, die durch die Abtasteinheit 7 abgetastet wird. Die Codierung und die Abtastung können optisch, magnetisch oder in sonstiger Weise erfolgen. Entsprechend besteht die Maßverkörperung 9 aus Glas mit einer Beschichtung oder Gravierung oder aus Metall. Die Erfindung umfasst alle bekannten Ausbildungen der Maßverkörperung 9 und der zugeordneten Abtasteinheit 7.

Gegenstand der Erfindung ist die nachfolgend erläuterte Justierung des Abstandes von Maßverkörperung 9 und Abtasteinheit 7.

Wie in der Zeichnung schematisch dargestellt ist, ist die Abtasteinheit 7 auf einem Träger 8 angeordnet. Der Träger ist vorzugsweise mit einer Leiterplatine ausgebildet, die zur Verschaltung der Abtasteinheit 7 dient. Auf dem Träger 8 ist neben der Abtasteinheit 7 und dieser benachbart eine Flachspule 3 aufgebracht, die insbesondere auch als Leiterbahn auf der Leiterplatine ausgebildet sein kann. Die Ebene der Flachspule 3 liegt dabei planparallel zu der der Maßverkörperung 9 zugewandten Fläche der Abtasteinheit 7. Die Flachspule 3 ist Bestandteil eines Oszillators 5 und bildet die frequenzbestimmende Induktivität des Schwingkreises des Oszillators 5.

Für die Justierung wird ein Testkörper 1 verwendet, der die Maßverkörperung 9 simuliert. Hierzu ist der Testkörper 1 so gestaltet, dass er den gleichen magnetischen Widerstand aufweist wie die Maßverkörperung 9. Hierzu besteht der Testkörper 1 aus demselben Werkstoff wie die Maßverkörperung 9. Falls die Maßverkörperung 9 geschichtet aufgebaut ist, ist der Testkörper 1 entsprechend geschichtet aufgebaut. Die Materialdicke des Testkörpers 1 entspricht der Materialdicke der Maßverkörperung 9. Die Flächenabmessungen sind weniger entscheidend, jedoch sollten die Flächenabmessungen des Testkörpers 1 zumindest mit dem Flächenbereich der Maßverkörperung 9 übereinstimmen, der sich im Einflussbereich der Abtasteinheit 7 befindet.

Der Testkörper 1 wird an die Abtasteinheit 7 gebracht, wobei ein Abstandshalter 2 in der Weise zwischen dem Testkörper 1 und der Abtasteinheit 7 angeordnet wird, dass der Testkörper 1 an einer Fläche des Abstandshalters 2 und die Abtasteinheit 7 an einer entgegengesetzten planparallelen Fläche des Abstandshalters 2 anliegt. Der Abstandshalter 2 hat vorzugsweise die Form einer quaderförmigen Platte, wobei der Testkörper 1 an der einen Flachseite und die Abtasteinheit 7 an der entgegengesetzten Flachseite flächig anliegen. Der Abstandshalter 2 besteht aus einem unmagnetischen Werkstoff, vorzugsweise aus einem Kunststoff. Zur einfacheren Handhabung kann der Abstandshalter 2 an dem Testkörper 1 fest angebracht, z. B. mit diesem verklebt sein. Die Dicke des Abstandshalters 2 zwischen dem Testkörper 1 und der Abtasteinheit 7 entspricht dem Abstand dₒₚₜ, den die Abtasteinheit 7 für eine optimale Funktion der Messeinrichtung von der Maßverkörperung 9 einhalten soll.

Wenn der Testkörper 1 mit dem dazwischen angeordneten Abstandshalter 2 an der Abtasteinheit 7 anliegt, wird die Frequenz fₒₚₜ des Oszillators 5 gemessen. Da die Schaltung des Schwingkreises des Oszillators 5 unverändert bleibt, wird die Frequenz fₒₚₜ durch die Induktivität der Flachspule 3 bestimmt, die wiederum durch den Testkörper 1, dessen Abstand und dessen magnetischen Widerstand beeinflusst wird. Da der Oszillator 5 mit der Flachspule 3 unverändert bleibt und auch der magnetische Widerstand des Testkörpers 1 durch dessen Werkstoff und dessen Abmessungen vorgegeben ist, ist die Frequenz fₒₚₜ ein Maß für den Abstand des Testkörpers 1 von der Flachspule 3 und, weil die Flachspule 3 und die Abtasteinheit 7 auf demselben Träger 8 sitzen, auch ein Maß für den Abstand zwischen Testkörper 1 und Abtasteinheit 7.

Die Frequenz fₒₚₜ wird in einer Auswerteelektronik 6 ermittelt und in einem nicht flüchtigen Speicher 4, z. B. einem EEPROM, gespeichert. Der Speicher 4, die Schaltung des Oszillators 5 und die Auswerteelektronik 6 können auf derselben Leiterplatine angeordnet sein wie die Flachspule 3 und über diese Leiterplatine verschaltet sein.

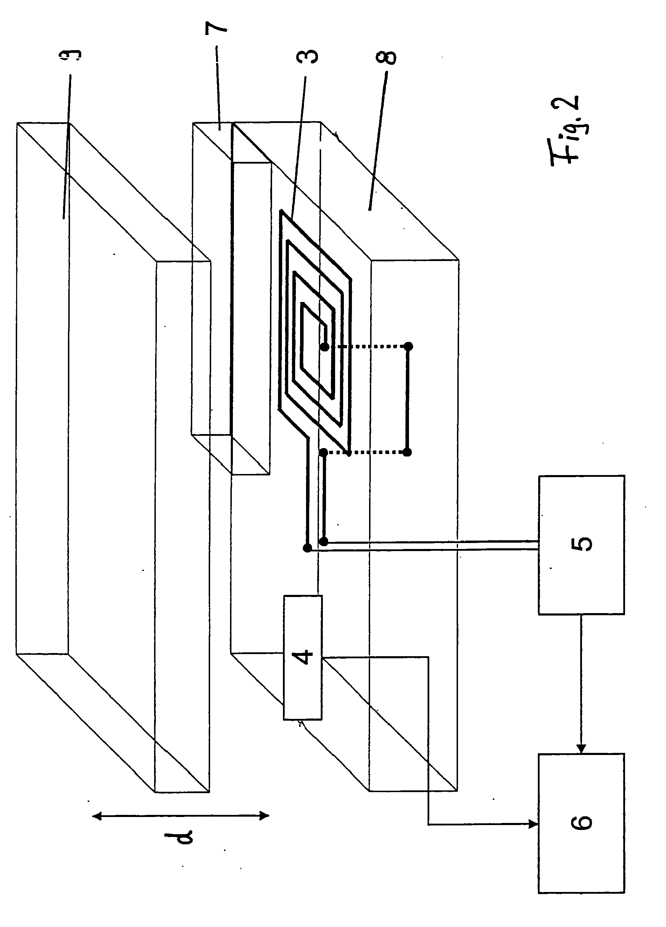

Die Montage und Justierung der Messeinrichtung ist schematisch in Figur 2 dargestellt.

In der Messeinrichtung ist die Maßverkörperung 9 gelagert. Der Träger 8, der, gegebenenfalls über eine Leiterplatine, die Abtasteinheit 7 und zumindest die Flachspule 3 trägt, wird in dem Gehäuse der Messeinrichtung mittels einer Stelleinrichtung in der Weise montiert, dass der Träger 8 in Bezug auf die Maßverkörperung 9 verstellbar ist, um den Abstand d zwischen der Maßverkörperung 9 und der Abtasteinheit 7 zu variieren, wie dies in Figur 2 durch einen Pfeil angedeutet ist. Für diese Verstellung kann der Träger 8 auf einem verstellbar geführten Schlitten angeordnet sein oder durch einen solchen Schlitten gebildet sein. Dieser Schlitten ist vorzugsweise von der Außenseite der montierten Messeinrichtung mittels einer Stellschraube verstellbar.

Bei der Montage der Messeinrichtung wird der Träger 8 mittels der Stelleinrichtung so eingestellt, dass ein möglichst großer Abstand zwischen der Abtasteinheit 7 und der Maßverkörperung 9 besteht. Für die Justierung wird der in dem Speicher 4 gespeicherte Frequenzwert fₒₚₜ des gewünschten Abstandes in die Auswerteelektronik 6 eingelesen. Weiter wird die jeweilige Frequenz des Oszillators 5 in der Auswerteelektronik 6 gemessen und mit diesem gespeicherten Frequenzwert fₒₚₜ verglichen. Der Abstand zwischen dem Träger 8, auf welchem die Abtasteinheit 7 und die Flachspule 3 angeordnet sind, und der Maßverkörperung 9 wird dann mittels der Stelleinrichtung verkleinert, bis die Frequenz des Oszillators 5 mit der gespeicherten Frequenz fₒₚₜ übereinstimmt. Da der Testkörper 1 eine Nachbildung der Maßverkörperung 9 in Bezug seinen Einfluss auf das Feld der Flachspule 3 darstellt, bedeutet die Übereinstimmung zwischen der Frequenz f und der gespeicherten Frequenz fₒₚₜ auch, dass die Maßverkörperung 9 und die Abtasteinheit 7 denselben Abstand dₒₚₜ haben, wie er der Dicke des Abstandshalters 2 entspricht.

Der Abstand zwischen der Abstandseinheit 7 und der Maßverkörperung 9 kann somit bei montierter Messeinrichtung in einfacher Weise und mit hoher Genauigkeit justiert werden.

### Bezugszeichenliste

- 1: Testkörper
- 2: Abstandshalter
- 3: Flachspule
- 4: Speicher
- 5: Oszillator
- 6: Auswerteelektronik
- 7: Abtasteinheit
- 8: Träger
- 9: Maßverkörperung

- d: Abstand
- dₒₚₜ: vorgegebener Abstand
- f: Frequenz
- fₒₚₜ: Frequenz bei vorgegebenem Abstand

## Patentansprüche

1. Verfahren zur Justierung einer Positions- und/oder Geschwindigkeitsmesseinrichtung, bei welcher eine Maßverkörperung (9) und eine zugeordnete Abtasteinheit (7) einen vorgegebenen Abstand aufweisen,
**dadurch gekennzeichnet, dass** die Abtasteinheit (7) und eine Flachspule (3), die die frequenzbestimmende Induktivität eines Oszillators (5) ist, auf einem gemeinsamen Träger (8) angeordnet werden, dass die Abtasteinheit (7) an eine Oberfläche eines Abstandhalters (2) und ein Testkörper (1) an eine entgegengesetzte Oberfläche des Abstandshalters (2) angelegt werden, wobei der Anstandshalter (2) aus einem nicht magnetisierbaren Werkstoff besieht und seine Dicke dem optimalen Abstand (dₒₚₜ) von Maßverkörperung (9) und Abtasteinheit (7) entspricht und wobei der Testkörper (1) in Bezug auf seinen magnetischen Widerstand der Maßverkörperung (9) entspricht, dass die Frequenz (fₒₚₜ) des die Flachspule (3) enthaltenden Oszillators (5) ermittelt und gespeichert wird, dass der Träger (8) in seinem Abstand von der Maßverkörperung (9) verstellbar in der Messeinrichtung montiert wird und dass der Abstand (d) von Träger (8) und Maßverkörperung (9) verstellt wird, bis die Frequenz (f) des Oszillators (5) mit der gespeicherten Frequenz (fₒₚₜ) übereinstimmt.

2. Verfahren nach Anspruch 1,
**dadurch gekennzeichnet, dass** der Testkörper (1) und der Abstandshalter (2) fest miteinander verbunden sind.

3. Verfahren nach Anspruch 1 oder 2,
**dadurch gekennzeichnet, dass** die Maßverkörperung (9) die Form einer Scheibe hat und dass der Testkörper (1) die Form einer Scheibe mit gleicher Dicke und gleichem Aufbau aus gleichem Werkstoff hat.

4. Verfahren nach einem der Ansprüche 1 bis 3,
**dadurch gekennzeichnet, dass** der Abstandshalter (2) aus einem Kunststoff besteht.

5. Vorrichtung zur Justierung einer Positions- und/oder Geschwindigkeitsmesseinrichtung, bei welcher eine Maßverkörperung (9) und eine zugeordnete Abtasteinheit (7) einen vorgegebenen Abstand aufweisen,
**dadurch gekennzeichnet, dass** die Abtasteinheit (7) und eine Flachspule (3) auf einem gemeinsamen Träger (8) angeordnet sind, dass der Träger (8) in der Messeinrichtung im Abstand gegen die Maßverkörperung (9) verstellbar ist, dass ein Testkörper (1) vorgesehen ist, der mit seinem magnetischen Widerstand der Maßverkörperung (9) entspricht, dass der Testkörper (1) mit einem dazwischen angeordneten Abstandshalter (2) an der Abtasteinheit (7) anlegbar ist, dass die Flachspule (3) die frequenzbestimmende Induktivität eines Oszillators (5) ist, dass die bei Anliegen des Testkörpers (1) mit dem Abstandshalter (2) an der Abtasteinheit (7) ermittelte Frequenz (fₒₚₜ) des Oszillators (5) in einem nicht flüchtigen Speicher (4) gespeichert wird und dass der Träger (8) in der Messeinrichtung in seinem Abstand von der Maßverkörperung (9) so einstellbar ist, dass die Frequenz (f) des Oszillators (5) mit der gespeicherten Frequenz (fₒₚₜ) übereinstimmt.

6. Vorrichtung nach Anspruch 5,
**dadurch gekennzeichnet, dass** der Abstandshalter (2) zwei zueinander parallele Anlageflächen für den Testkörper (1) und die Abtasteinheit (7) aufweist, deren Abstand dem vorgegebenen Abstand (dₒₚₜ) von Maßverkörperung (9) und Abtasteinheit (7) in der Messeinrichtung entspricht.

7. Vorrichtung nach Anspruch 5 oder 6,
**dadurch gekennzeichnet, dass** der Abstandshalter aus einem Kunststoff besteht.

8. Vorrichtung nach einem der Ansprüche 5 bis 7,
**dadurch gekennzeichnet, dass** die Flachspule (3) in einer zur Ebene der Maßverkörperung (9) parallelen Ebene auf der der Maßverkörperung (9) zugewandten Seite des Trägers (8) angeordnet ist.

9. Vorrichtung nach einem der Ansprüche 5 bis 8,
**dadurch gekennzeichnet, dass** der Träger (8) eine Leiterplatine aufweist, auf welcher die Abtasteinheit (7) und die Flachspule (3) angeordnet sind.

10. Vorrichtung nach Anspruch 9,
**dadurch gekennzeichnet, dass** der Speicher (4) auf der Leiterplatine angeordnet ist und insbesondere als EEPROM-Speicher ausgebildet ist.

11. Vorrichtung nach einem der Ansprüche 5 bis 10,
**dadurch gekennzeichnet, dass** bei montierter Messeinrichtung der Träger (8) von außen zugänglich verstellbar ist.
